# EUROPEAN PATENT SPECIFICATION

(11) **EP 1 848 186 B1**
(45) Date of publication and mention of the grant of the patent: **21.06.2017**
(21) Application number: 07105362.3
(22) Date of filing: 30.03.2007
(51) Int. Cl.: H04M 1/725

(54) **System and method for transferring character between portable communication devices**
System und Verfahren zur Zeichenübertragung zwischen tragbaren Kommunikationsgeräten
Système et procédé pour le transfert de caractères entre dispositifs de communication portables

(30) Priority: 18.04.2006 KR 20060034805
(43) Date of publication of application: 24.10.2007
(73) Proprietor: Samsung Electronics Co., Ltd., Suwon-si, Gyeonggi-do, 443-742 (KR)
(72) Inventor: Park, Kyong Ha c/o Samsung Electronics Co., Ltd., Gyeonggi-do (KR)
(74) Representative: Grünecker Patent- und Rechtsanwälte PartG mbB

(56) References cited:
- EP-A- 1 560 470
- WO-A-2005/067272
- US-A1- 2003 222 874

## Description

### BACKGROUND OF THE INVENTION

### 1. Field of the Invention

The present invention relates generally to portable communication devices and, more particularly, to a system and a method for executing a bi-directional character transfer between the portable communication devices to share information and function thereof.

### 2. Description of the Related Art

A portable communication device, which provides functions of data processing, information offering, and communication while being carried in a pocket or the like, has become one of the necessary conveniences of modern life. Moreover, with the rapid growth of relevant technologies, and to satisfy a variety of users' increasing demands, the portable device has been developed to have a variety of additional functions in addition to inherent or essential functions thereof.

Among such additional functions of the portable device (especially, a mobile phone), a character (or sometimes referred to as an avatar) has attracted attention in these days. For example, recently developed is an artificial intelligence pet game which rears an imaginary pet dog in the mobile phone. This is one type of entertainment application for increasing a user's pleasure when using the mobile phone. However, such conventional characters may only operate in the portable device itself. It is therefore necessary to diversify the additional services of the portable device by extending the range of utilization of the character.

Some users may possess two or more portable devices such as a mobile phone, a portable multimedia player (PMP), a personal digital assistant (PDA), etc. In this case, there is no way of easily exchanging information or possessing functions in common between the devices.

US 2003/222874 A1 discloses an animated character messaging system with at least a first terminal and a second terminal. Messages are exchanged between the two terminals. Such a message is a so-called animated character message, which means something like an Avatar with an underlying message, such that the animated character is combined with the message and then transmitted. Parts of corresponding terminals are, for example, a message storing part used for storing the animated character message prior to transmitting, and also used for storing the message after receiving. Another part is a character driving unit for driving the character, using the message executing part or the editing system.

### BRIEF SUMMARY OF THE INVENTION

It is an object of the present invention to provide a character transference system and method capable to execute bi-directional character transference between portable communication devices to share information and function thereof.

This object is solved by the features of claims 1 and 9.

The features of the subclaims represent advantageous embodiments of the invention.

In the system, the first memory unit may further store first information carried on the character transferred to the second device. The second device may further include an information extraction unit for extracting the first information from the character.

The second memory unit may further store second information produced by operation of the character and carried on the character transferred again to the first device. The first device may further include an information extraction unit for extracting the second information from the character.

The first device may further include a device recognition unit for recognizing the second device from an answering signal the second device transmits in response to a device search signal of the first device.

The second device may further include a device recognition unit for recognizing the first device from an answering signal the first device transmits in response to a device search signal of the second device.

Each of the first and second devices may be one of a mobile phone, a smart phone, a personal digital assistant (PDA), a handheld PC, a portable multimedia player (PMP), a pedestrian navigation system (PNS), and a car navigation system (CNS).

The transferring of the character may include transferring first information stored in the first device and carried on the character. The method may further comprise extracting the first information from the transferred character in the second device.

The transferring of the character may include transferring second information produced by operation of the character and carried on the character. The method may further comprise extracting the second information from the transferred character in the first device.

The recognizing of one of the first and second devices may include transmitting a device search signal in the first device, transmitting an answering signal in response to the device search signal in the second device, receiving the answering signal in the first device to recognize the second device. Alternatively, the recognizing of one of the first and second devices may include transmitting a device search signal in the second device, transmitting an answering signal in response to the device search signal in the first device, receiving the answering signal in the second device to recognize the first device.

### BRIEF DESCRIPTION OF THE DRAWINGS

FIG. 1 is an exemplary view showing character transference between portable devices.
FIG. 2 is a block diagram illustrating a character transfer system between portable devices in accordance with the present invention.
FIG. 3 is a flow diagram illustrating a character transfer method between portable devices in accordance with the present invention.
FIG. 4 is a block diagram illustrating a character transfer system between portable devices in accordance with the present invention.
FIG. 5 is a flow diagram illustrating a character transfer method between portable devices in accordance with the present invention.

### DETAILED DESCRIPTION OF THE INVENTION

Exemplary, non-limiting embodiments of the present invention will now be described more fully hereinafter with reference to the accompanying drawings. This invention may, however, be embodied in many different forms and should not be construed as limited to the exemplary embodiments set forth herein. Rather, the disclosed embodiments are provided so that this disclosure will be thorough and complete, and will fully convey the scope of the invention to those skilled in the art. The principles and features of this invention may be employed in varied and numerous embodiments without departing from the scope of the invention. Well-known structures and processes are not described or illustrated in detail to avoid obscuring the essence of the present invention.

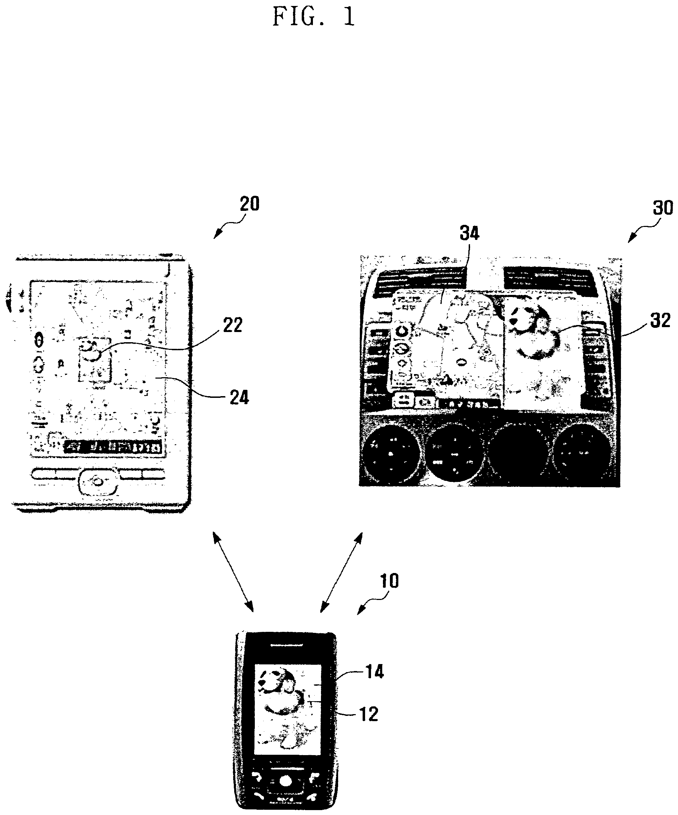

FIG. 1 is diagram illustrating a character transference between portable devices. Referring to FIG. 1, a mobile phone 10 has a pre-established character function by which a character 12 performs various actions in a display unit 14 depending on a user's input. The character 12 has in general the shape of an animal such as a dog, and may have other shapes such as a human, a robot, or any combination thereof.

The character 12 in the mobile phone 10 can be transferred (i.e. copied) to other portable devices. FIG. 1 shows characters 22 and 32 respectively transferred to a pedestrian navigation system (PNS) 20 and a car navigation system (CNS) 30, and then displayed on respective display units 24 and 34. Such character transference is made through a short-distance wireless communication such as Bluetooth, or a wired interface such as a USB (Universal Serial Bus) and IEEE (Institute of Electrical and Electronic Engineers)1394, as are well known in the art.

For example, once a user carrying the mobile phone 10 gets in a car, one of the mobile phone 10 and the CNS 30 recognizes the other device through the Bluetooth connection. Thus both devices 10 and 30 are connected to each other and then the character 12 of the mobile phone 10 is transferred to the CNS 30. After the transfer of the character, the character 32 in the CNS 30 is used for navigation functions instead of, or together with, a typical graphic interface.

Character transfer of the invention does not mean only a copy of the character between the connected devices. Along with the character transfer, certain information and/or functions are also transferred between the devices. So such devices can share information and functions.

The mobile phone 10, the PNS 20 and the CNS 30 are used as examples of the portable devices, however the present invention is not limited to such devices.

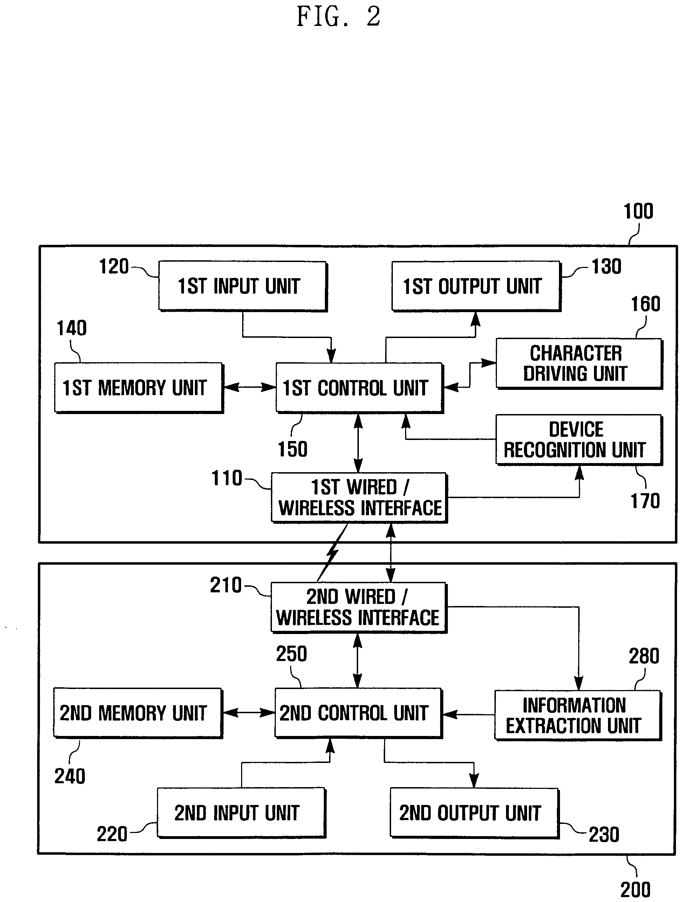

FIG. 2 is a block diagram illustrating a character transfer system between portable devices in accordance with the present invention.

Referring to FIG 2, the character transfer system includes a first portable device 100 and a second portable device 200. Each device 100 and 200 is one of a mobile phone, a smart phone, a handheld PC, a PDA, a PMP, a PNS, a CNS, or other electronic device which provides functions of data processing, information offering, and communication while being carried by a user or equipped in a car.

The first device 100 includes a first wired/wireless interface 110, a first input unit 120, a first output unit 130, a first memory unit 140, a first control unit 150, a character driving unit 160, and a device recognition unit 170.

The second device 200 includes a wired/wireless interface 210, a second input unit 220, a second output unit 230, a second memory unit 240, a second control unit 250, and an information extraction unit 280.

The first and second devices 100 and 200 may further include any other conventional units such as a camera unit, a location measure unit, etc.

The first and second wired/wireless interfaces 110 and 210 not only perform a typical communication function for each device 100 and 200, but also allow a direct communication between the devices 100 and 200 themselves. The first wired/wireless interface 110 transmits a device search signal and then receives an answering signal. Additionally, the first wired/wireless interface 110 sends and receives a character to and from the second device 200. The second wired/wireless interface 210 receives a device search signal and then transmits an answering signal in response to the device search signal. Additionally, the second wired/wireless interface 210 sends and receives a character to and from the first device 100.

The first and second input units 120 and 220 respectively have at least one of a keypad, a touch screen, a jog stick, microphone, and other typical input units. The first and second input units 120 and 220 receive a user's input for operating the devices.

The first and second output units 130 and 230 respectively have at least one of a display, a speaker, an on-and-off light, a vibrator, etc. The first and second output units 130 and 230 represent actions of a character in a visual, audio, or vibrative manner.

The first and second memory unit 140 and 240 respectively store programs and data of each device 100 and 200. The first memory unit 140 stores at least one character and certain information, which are transferred at the same time to the second device 200. The second memory unit 240 stores the character and information transferred from the first device 100, and also stores additional information produced by the operation of the character. Such additional information is transferred to the first device 100 while the character is transferred again to the first device 100.

As discussed above, information in either device is transferred to the opposite device together with the character. The devices can have information in common through the transfer of the character. Such transferable information may include user profile data and other various data related to route guide, news, traffic, travel, weather, music, stock, language lesson, and the like.

The first and second control units 150 and 250 control the overall operation of the respective devices 100 and 200. The first control unit 150 transmits a device search signal through the first wired/wireless interface 110, and when the device recognition unit 170 recognizes the second device 200, transfers a character to the second device 200. Furthermore, the first control unit 150 transfers information so that the second device 200 may use a function of the first device 100. The second control unit 250 transmits an answering signal in response to the device search signal of the first device 100, and when the information extraction unit 280 extracts a necessary information, executes a function associated with the extracted information. In addition, the second control unit 250 transfers additional information produced by the operation of the character to the first device 100 and controls the second device 200 to use a function of the first device 100.

The character driving unit 160 drives a character of each device 100 and 200. The character driving unit 160 retrieves a character stored in the first memory unit 140 and represents the character through the first output unit 130 under the control of the first control unit 150. Additionally, the character driving unit 160 retrieves a character stored in the second memory unit 240 and represents the character through the second output unit 230 under the control of the second control unit 250. Alternatively, the second device 200 may have a separate character driving unit.

The device recognition unit 170 of the first device 100 recognizes that the first device 100 is connected to the second device 200 through a wired/wireless communication. In other words, the first wired/wireless interface 110 receives from the second device 200 an answering signal in response to a device search signal and thereby perceives the second device 200.

The information extraction unit 280 of the second device 200 decides whether the character transferred from the first device 100 carries information, and extracts information from the character. Similarly, the first device 100 may have a information extraction unit (not shown) for extracting information from a character transferred from the second device 200.

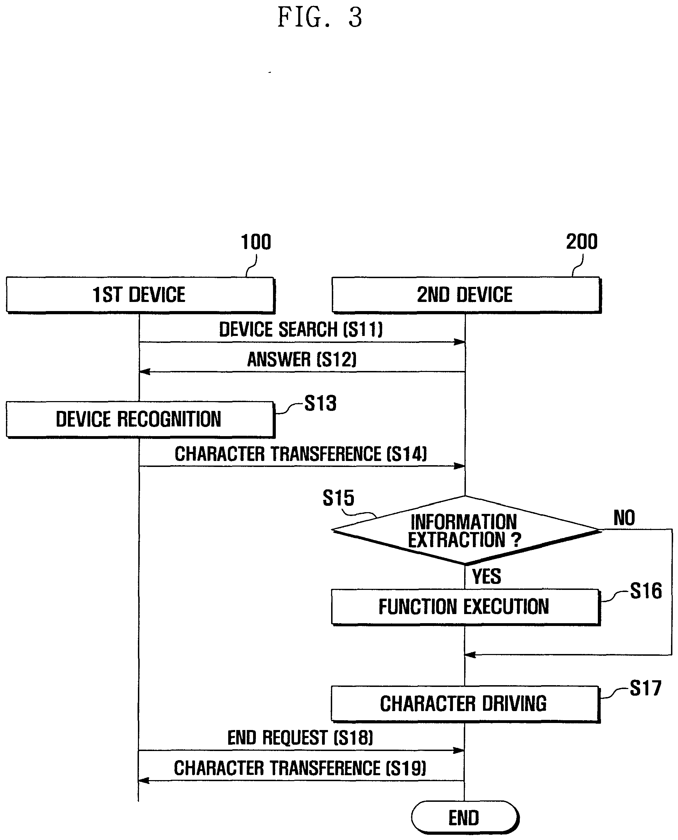

A method for executing a bi-directional character transfer between the portable communication devices will be described with reference to FIGS. 2 and 3. FIG. 3 is a flow diagram illustrating a character transference method between portable devices in accordance with the present invention.

Referring to FIGS. 2 and 3, the first device 100, e.g., a mobile phone, transmits a device search signal through the first wired/wireless interface 110 in step S11. The second device 200, e.g., a CNS, receives the device search signal of the first device 100 through the second wired/wireless interface 210, and transmits an answering signal in response to the device search signal to the first device 100 in step S12. The answering signal may include essential information of the second device 200.

The first device 100 receives the answering signal from the second device 200 through the first wired/wireless interface 110 and thereby recognizes the second device 200 in the device recognition unit 170 in step S13. Next, the first device 100 transfers a character to the second device 200 through the first wired/wireless interface 110 in step S14. The character stored in the first memory unit 140 is retrieved by the character driving unit 160 and represented through the first output unit 130. When the character is transferred, information stored in the first memory unit 140 may be also transferred to the second device 200.

After the second device 200 receives the character through the second wired/wireless interface 210, the information extraction unit 280 decides in step S15 whether or not the character carries information. If the character has information, the information extraction unit 280 extracts the information from the character and sends the extracted information to the second control unit 250. Then in step S16the second control unit 250 executes a function associated with the extracted information. For example, in the case where the information extraction unit 280 extracts user profile information from the character, the second control unit 250 executes proper functions such as route guide, data offering (news, traffic, weather, stock, etc.), music selection, and language lesson, based on the user profile information.

In step S17 the character driving unit 160 drives the character transferred to the second device 200 and represents the character through the second output unit 230. If it is decided that there is no information in the character in step S15, step S17 is carried out directly without step S16.

After that, the first device 100 sends an end request signal to the second device 200 in step S18. Once receiving the end request signal, the second device 200 transfers again the character to the first device 100 in step S19. Then the second device 200 ends operations of the character and its related functions. When the character returns to the first device 100, additional information produced by the operation of a character in the second device 200 may be also transferred to the first device 100. As described below, this transfer of the additional information may be made at any time before the second device 200 receives the end request signal. In addition, the first device 100 may examine the character returning from the first device 100 and then extract information from the character.

As discussed above, the character transfer system and method of the present invention allow the portable communication devices to share information and functions through the character transference between them. So the present invention may provide the continuity of the user's individual information.

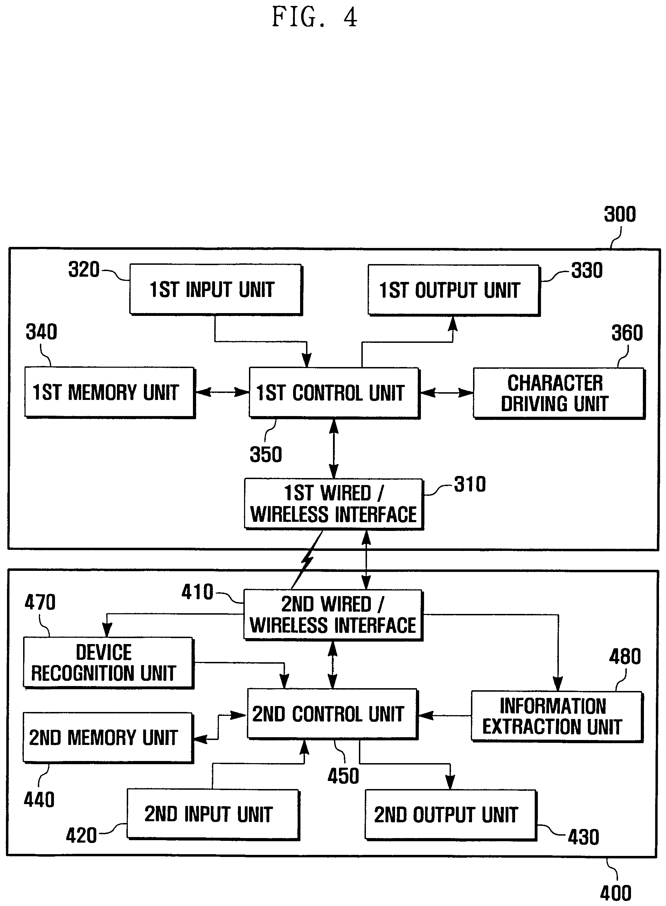

FIG. 4 is a block diagram illustrating a character transfer system between portable devices in accordance with another exemplary embodiment of the present invention.

As illustrated in FIG. 4, a character transference system of this embodiment includes a first device 300 and a second device 400. In comparison with the previous embodiment, a device recognition unit 470 of this embodiment belongs to the second device 400, not the first device 300. Except for this, elements of the system in this embodiment correspond to those in the previous embodiment. Therefore related descriptions will be omitted.

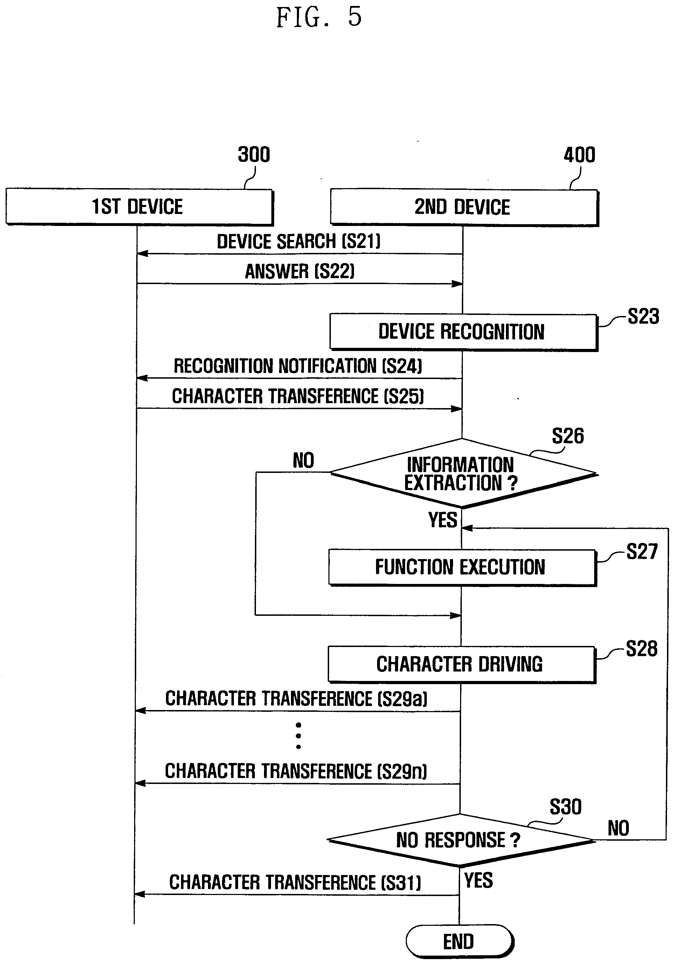

FIG. 5 is a flow diagram illustrating a character transference method between portable devices in accordance with another exemplary embodiment of the present invention.

Referring to FIGS. 4 and 5, in step S21 the second device 400 transmits a device search signal through a second wired/wireless interface 410. The first device 300 receives the device search signal of the second device 400 through a first wired/wireless interface 310, and in step S22 transmits an answering signal in response to the device search signal to the second device 400.

The second device 400 receives the answering signal from the first device 300 through the second wired/wireless interface 410 and thereby recognizes in step S23 the first device 300 in the device recognition unit 470. Next, in step S24 the second device 400 transfers a recognition notifying signal to the first device 300 through the second wired/wireless interface 410.

After receiving the recognition notifying signal through the first wired/wireless interface 310, in step S25 the first device 300 transfers a character to the second device 400. Information stored in a first memory unit 340 may be transferred, together with the character, to the second device 400.

The second device 400 receives the character through the second wired/wireless interface 410, and then in step S26 an information extraction unit 480 decides whether or not the character carries information. If the character has information, the information extraction unit 480 extracts information from the character and sends the extracted information to a second control unit 450. Then in step S27 the second control unit 450 executes a function associated with the extracted information.

A character driving unit 360 drives the character transferred to the second device 400 and represents the character through a second output unit 430 in step S28. If it is decided that there is no information in the character in step S26, step S28 is carried out directly without step S27.

While being connected to the first device 300, the second device 400 repeatedly transfers the character to the first device 300 in steps S29a ∼ S29n. When sending the character, the second device 340 further transfers additional information produced by the operation of the character.

The second device 400 continuously ascertains whether a response signal is sent from the first device 300 in step S30. If there is no response signal, the second device 400 finally transfers the character to the first device 300 in step S31 and ends operations of a character and related function. If there is the response signal in step S30, the second device 400 again performs steps S27 to S30.

While this invention has been particularly shown and described with reference to exemplary embodiments thereof, it will be understood by those skilled in the art that various changes in form and details may be made therein without departing from the scope of the invention as defined by the appended claims.

## Claims

1. A bi-directional character transference system between portable communication devices, the system comprising:
a first portable communication device (10, 100, 300), the first portable communication device comprising:
a first memory unit (140,340) for storing a character,
a character driving unit (160, 360) for displaying the character, and
a first wired/wireless interface (110, 310) for transferring the character to a second portable communication device (20, 200, 400), and
a second portable communication device (20, 200, 400), the second portable communication device comprising:
a second wired/wireless interface (210, 410) for allowing communication with the first wired/wireless interface (110, 310) and receiving the character transferred from the first device, and
a second memory unit (240, 440) for storing the received character,
wherein the first portable communication device (10, 100, 300) is further configured to transfer the character through the first wired/wireless interface (110, 310) to the second portable communication device (20, 200, 400), and
wherein the second portable communication device is further configured to:
display the character through a second output unit,
transfer additional information stored in the second memory unit (240, 440) to the first portable communication device, said additional information associated with operating the transferred character, and
transfer the displayed character to the first portable communication device in response to an end request signal from the first portable communication device.

2. The system of claim 1, wherein the first memory unit (140, 340) further stores first information carried on the character transferred to the second portable communication device (20, 200, 400).

3. The system of claim 2, wherein the second portable communication device (20, 200, 400) further includes an information extraction unit (280, 480) for extracting the first information from the character.

4. The system of claim 1, wherein the second memory unit (240, 440) further stores second information produced by operation of the character and carried on the character transferred again to the first portable communication device (10, 100, 300).

5. The system of claim 4, wherein the first portable communication device (10, 100, 300) further includes an information extraction unit for extracting the second information from the character.

6. The system of claim 1, wherein the first portable communication device (10, 100, 300) further includes a device recognition unit (170) for recognizing the second portable communication device (20, 200) from an answering signal the second portable communication device transmits in response to a device search signal of the first device.

7. The system of claim 1, wherein the second portable communication device (20, 400) further includes a device recognition unit (470) for recognizing the first device from an answering signal the first device transmits in response to a device search signal of the second portable communication device.

8. The system of claim 1, wherein each of the first and second portable communication devices is one of a mobile phone, a smart phone, a personal digital assistant (PDA), a handheld PC, a portable multimedia player (PMP), a pedestrian navigation system (PNS), and a car navigation system (CNS).

9. A bi-directional character transference method between a first portable communication device (10, 100, 300) and a second communication device (20, 200, 400) which are connected to each other through a wired/wireless interface (110, 310; 210, 410), the method comprising:
recognizing (513, 523) one of the first and second portable communication devices in the other device;
transferring (541, 525) data associated with a character stored in the first portable communication device to the second device;
displaying the transferred character in the second portable communication device; and
transferring additional information stored in the second device to the first device, wherein the additional information is associated with operating the transferred character,
transferring the character from the second device to the first device in response to an end request signal from the first device

10. The method of claim 9, wherein the transferring of the character includes transferring first information stored in the first portable communication device and carried on the character.

11. The method of claim 10, further comprising:
extracting the first information from the transferred character in the second portable communication device.

12. The method of claim 9, wherein the transferring of the character includes transferring second information produced by operation of the character and carried on the character.

13. The method of claim 12, further comprising:
extracting the second information from the transferred character in the first portable communication device.

14. The method of claim 9, wherein the recognizing of one of the first and second portable communication devices includes transmitting (511) a device search signal in the first device, transmitting an answering signal in response to the device search signal in the second device, receiving the answering signal in the first device to recognize the second device.

15. The method of claim 9, wherein the recognizing of one of the first and second portable communication devices includes transmitting (521) a device search signal in the second portable communication device, transmitting an answering signal in response to the device search signal in the first portable communication device, receiving the answering signal in the second portable communication device to recognize the first portable communication device.

16. The method of claim 9, wherein each of the first and second portable communication devices is one of a mobile phone, a smart phone, a personal digital assistant (PDA), a handheld PC, a portable multimedia player (PMP), a pedestrian navigation system (PNS), and a car navigation system (CNS).

## Patentansprüche

1. Bidirektionales Zeichenübertragungssystem zwischen tragbaren Kommunikationsvorrichtungen, wobei das System umfasst:
eine erste tragbare Kommunikationsvorrichtung (10, 100, 300), wobei die erste tragbare Kommunikationsvorrichtung umfasst:
eine erste Speichereinheit (140, 340) zum Speichern eines Zeichens,
eine Zeichenansteuereinheit (160, 360) zum Anzeigen des Zeichens und
eine erste drahtgebundene/drahtlose Schnittstelle (110, 310) zum Übertragen des Zeichens auf eine zweite tragbare Kommunikationsvorrichtung (20, 200, 400) und Eine zweite tragbare Kommunikationsvorrichtung (20, 200, 400), wobei die zweite tragbare Kommunikationsvorrichtung umfasst:
eine zweite drahtgebundene/drahtlose Schnittstelle (210, 410) zum Ermöglichen der Kommunikation mit der ersten drahtgebundenen/drahtlosen Schnittstelle (110, 310) und zum Empfangen des von der ersten Vorrichtung übertragenen Zeichens und
eine zweite Speichereinheit (240, 440) zum Speichern des empfangenen Zeichens,
wobei die erste tragbare Kommunikationsvorrichtung (10, 100, 300) weiterhin dazu eingerichtet ist, das Zeichen durch die erste drahtgebundene/drahtlose Schnittstelle (110, 310) zu der zweiten tragbaren Kommunikationsvorrichtung (20, 200, 400) zu übertragen, und
die zweite tragbare Kommunikationsvorrichtung ferner dazu eingerichtet ist:
das Zeichen durch eine zweite Ausgabeeinheit anzuzeigen,
die in der zweiten Speichereinheit (240, 440) gespeicherten zusätzlichen Informationen zu der ersten tragbaren Kommunikationsvorrichtung zu übertragen, wobei die zusätzlichen Informationen dem Betrieb des übertragenen Zeichens zugeordnet sind und
das angezeigte Zeichen zu der ersten tragbaren Kommunikationsvorrichtung als Antwort auf ein Endanforderungssignal von der ersten tragbaren Kommunikationsvorrichtung zu übertragen.

2. System nach Anspruch 1, bei dem die erste Speichereinheit (140, 340) weiterhin erste Informationen speichert, die auf dem Zeichen mitgeführt werden, das zu der zweiten tragbaren Kommunikationsvorrichtung (20, 200, 400) übertragen wird.

3. System nach Anspruch 2, bei dem die zweite tragbare Kommunikationsvorrichtung (20, 200, 400) weiterhin eine Informationsextraktionseinheit (280, 480) zum Extrahieren der ersten Informationen aus dem Zeichen umfasst.

4. System nach Anspruch 1, bei dem die zweite Speichereinheit (240, 440) weiterhin zweite Informationen speichert, die durch den Betrieb des Zeichens erzeugt und auf dem Zeichen mitgeführt werden, das erneut zu der ersten tragbaren Kommunikationsvorrichtung (10, 100, 300) übertragen wird.

5. System nach Anspruch 4, bei dem die erste tragbare Kommunikationsvorrichtung (10, 100, 300) ferner eine Informationsextraktionseinheit zum Extrahieren der zweiten Informationen aus dem Zeichen umfasst.

6. System nach Anspruch 1, bei dem die erste tragbare Kommunikationsvorrichtung (10, 100, 300) ferner eine Vorrichtungserkennungseinheit (170) zur Erkennung der zweiten tragbaren Kommunikationsvorrichtung (20, 200) aus einem Antwortsignal umfasst, das die zweite tragbare Kommunikationsvorrichtung in Erwiderung auf ein Vorrichtungssuchsignal desr ersten Vorrichtung sendet.

7. System nach Anspruch 1, bei dem die zweite tragbare Kommunikationsvorrichtung (20, 400) weiterhin eine Vorrichtungserkennungseinheit (470) zum Erkennen der ersten Vorrichtung aus einem Antwortsignal umfasst, das die erste Vorrichtung in Erwiderung auf ein Vorrichtungssuchsignal der zweiten tragbaren Kommunikationsvorrichtung sendet.

8. System nach Anspruch 1, bei dem jedee der ersten und zweiten tragbaren Kommunikationsvorrichtungen ein Mobiltelefon, ein Smartphone, ein Personal Digital Assistant (PDA), ein Handgeräte-PC, ein tragbares Multimedia-Abspielgerät (PMP), ein Fußgänger-Navigationssystem (PNS) oder ein Autonavigationssystem (CNS) ist.

9. Bidirektionales Zeichenübertragungsverfahren zwischen einer ersten tragbaren Kommunikationsvorrichtung (10, 100, 300) und einer zweiten Kommunikationsvorrichtung (20, 200, 400), die über eine drahtgebundene/drahtlose Schnittstelle (110, 310; 210, 410) miteinander verbunden sind, wobei das Verfahren umfasst:
Erkennen (513, 523) einer der ersten und zweiten tragbaren Kommunikationsvorrichtungen in der anderen Vorrichtung;
Übertragen (541, 525) von Daten, die mit einem Zeichen assoziiert sind, das in der ersten tragbaren Kommunikationsvorrichtung gespeichert ist, zu der zweiten Vorrichtung;
Anzeigen des übertragenen Zeichens in der zweiten tragbaren Kommunikationsvorrichtung; und
Übertragen zusätzlicher Informationen, die in der zweiten Vorrichtung gespeichert sind, zu der ersten Vorrichtung, wobei die zusätzlichen Informationen mit dem Betreiben des übertragenen Zeichens assoziiert sind, und
Übertragen des Zeichens von der zweiten Vorrichtung zu der ersten Vorrichtung in Erwiderung auf ein Endanforderungssignal von der ersten Vorrichtung.

10. Verfahren nach Anspruch 9, bei dem die Übertragung des Zeichens das Übertragen der ersten Informationen umfasst, die in der ersten tragbaren Kommunikationsvorrichtung gespeichert sind und auf dem Zeichen mitgeführt werden.

11. Verfahren nach Anspruch 10, weiterhin umfassend:
Extrahieren der ersten Informationen aus dem übertragenen Zeichen in der zweiten tragbaren Kommunikationsvorrichtung.

12. Verfahren nach Anspruch 9, bei dem das Übertragen des Zeichens das Übertragen der zweiten Informationen umfasst, die durch den Betrieb des Zeichens erzeugt und auf dem Zeichen mitgeführt werden.

13. Verfahren nach Anspruch 12, weiterhin umfassend:
Extrahieren der zweiten Informationen aus dem übertragenen Zeichen in der ersten tragbaren Kommunikationsvorrichtung.

14. Verfahren nach Anspruch 9, bei dem das Erkennen einer der ersten und zweiten tragbaren Kommunikationsvorrichtungen das Senden (511) eines Vorrichtungssuchsignals in der ersten Vorrichtung, das Senden eines Antwortsignals als Erwiderung auf das Vorrichtungssuchsignal in der zweiten Vorrichtung und das Empfangen des Antwortsignals in der ersten Vorrichtung umfasst, um die zweite Vorrichtung zu erkennen.

15. Verfahren nach Anspruch 9, bei dem das Erkennen einer der ersten und zweiten tragbaren Kommunikationsvorrichtungen das Senden (521) eines Vorrichtungssuchsignals in der zweiten tragbaren Kommunikationsvorrichtung, das Senden eines Antwortsignals in Erwiderung auf das Vorrichtungssuchsignal in der ersten tragbaren Kommunikationsvorrichtung und das Empfangen des Antwortsignals in der zweiten tragbaren Kommunikationsvorrichtung umfasst, um die erste tragbare Kommunikationsvorrichtung zu erkennen.

16. Verfahren nach Anspruch 9, bei dem jede der ersten und zweiten tragbaren Kommunikationsvorrichtungen ein Mobiltelefon, ein Smartphone, ein Personal Digital Assistant (PDA), ein Handgeräte-PC, ein tragbares Multimedia-Abspielgerät (PMP), ein Fußgänger-Navigationssystem (PNS) oder ein Autonavigationssystem (CNS) ist.

## Revendications

1. Système de transfert de personnages bidirectionnel entre dispositifs de communication portables, le système comprenant :
un premier dispositif de communication portable (10, 100, 300), le premier dispositif de communication portable comprenant :
une première unité mémoire (140, 340) pour stocker un personnage,
une unité pilote de personnage (160, 360) pour afficher le personnage, et
une première interface filaire/sans fil (110, 310) pour transférer le personnage à un second dispositif de communication portable (20, 200, 400), et
un second dispositif de communication portable (20, 200, 400), le second dispositif de communication portable comprenant :
une seconde interface filaire/sans fil (210, 410) pour permettre une communication avec la première interface filaire/sans fil (110, 310) et recevoir le personnage transféré par le premier dispositif, et
une seconde unité mémoire (240, 440) pour stocker le personnage reçu,
où le premier dispositif de communication portable (10, 100, 300) est en outre configuré pour transférer le personnage à travers la première interface filaire/sans fil (110, 310) au second dispositif de communication portable (20, 200, 400), et
où le second dispositif de communication portable est en outre configuré pour :
afficher le personnage via une seconde unité de sortie,
transférer des informations supplémentaires stockées dans la seconde unité mémoire (240, 440) au premier dispositif de communication portable, lesdites informations supplémentaires étant associées à la manipulation du personnage transféré, et
transférer le personnage affiché au premier dispositif de communication portable en réponse à un signal de requête de fin provenant du premier dispositif de communication portable.

2. Système selon la revendication 1, où la première unité mémoire (140, 340) stocke en outre des premières informations transportées par le personnage transféré au second dispositif de communication portable (20, 200, 400).

3. Système selon la revendication 2, où le second dispositif de communication portable (20, 200, 400) inclut en outre une unité d'extraction d'informations (280, 480) pour extraire les premières informations du personnage.

4. Système selon la revendication 1, où la seconde unité mémoire (240, 440) stocke en outre des secondes informations produites par la manipulation du personnage et transportées avec le personnage transféré à nouveau au premier dispositif de communication portable (10, 100, 300).

5. Système selon la revendication 4, où le premier dispositif de communication portable (10, 100, 300) inclut en outre une unité d'extraction d'informations pour extraire les secondes informations du personnage.

6. Système selon la revendication 1, où le premier dispositif de communication portable (10, 100, 300) inclut en outre une unité de reconnaissance de dispositif (170) pour reconnaître le second dispositif de communication portable (20, 200) à partir d'un signal de réponse que le second dispositif de communication portable transmet en réponse à un signal de recherche de dispositif du premier dispositif.

7. Système selon la revendication 1, où le second dispositif de communication portable (20, 400) inclut en outre un dispositif de reconnaissance de dispositif (470) pour reconnaître le premier dispositif à partir d'un signal de réponse que le premier dispositif transmet en réponse à un signal de recherche de dispositif du second dispositif de communication portable.

8. Système selon la revendication 1, où chacun des premier et second dispositifs de communication portables est un dispositif parmi un téléphone portable, un smartphone, un assistant numérique personnel (PDA), un PC de poche, un lecteur multimédia portable (PMP), un système de navigation pédestre (PNS) et un système de navigation automobile (CNS).

9. Procédé de transfert de personnage bidirectionnel entre un premier dispositif de communication portable (10, 100, 300) et un second dispositif de communication portable (20, 200, 400) qui sont connectés l'un à l'autre via une interface filaire/sans fil (110, 310 ; 210, 410), le procédé comprenant :
la reconnaissance (513, 523) d'un des premier et second dispositifs de communication portables dans l'autre dispositif;
le transfert (541, 525) de données associées à un personnage stocké dans le premier dispositif de communication portable au second dispositif ;
l'affichage du personnage transféré dans le second dispositif de communication portable ; et
le transfert d'informations supplémentaires stockées dans le second dispositif au premier dispositif, où les informations supplémentaires sont associées à la manipulation du personnage transféré,
le transfert du personnage du second dispositif au premier dispositif en réponse à un signal de requête de fin provenant du premier dispositif.

10. Procédé selon la revendication 9, où le transfert du personnage inclut le transfert des premières informations stockées dans le premier dispositif de communication portable et transportées avec le personnage.

11. Procédé selon la revendication 10, comprenant en outre :
l'extraction des premières informations du personnage transféré dans le second dispositif de communication portable.

12. Procédé selon la revendication 9, où le transfert du personnage inclut le transfert des secondes informations produites par la manipulation du personnage et transportées avec le personnage.

13. Procédé selon la revendication 12, comprenant en outre :
l'extraction des secondes informations du personnage transféré dans le premier dispositif de communication portable.

14. Procédé selon la revendication 9, où la reconnaissance d'un des premier et second dispositifs de communication portables inclut la transmission (511) d'un signal de recherche de dispositif par le premier dispositif, la transmission par le second dispositif d'un signal de réponse en réponse au signal de recherche de dispositif, la réception du signal de réponse par le premier dispositif pour reconnaître le second dispositif.

15. Procédé selon la revendication 9, où la reconnaissance d'un des premier et second dispositifs de communication portables inclut la transmission (521) d'un signal de recherche de dispositif par le second dispositif de communication portable, la transmission par le premier dispositif de communication portable d'un signal de réponse en réponse au signal de recherche de dispositif, la réception du signal de réponse par le second dispositif de communication portable pour reconnaître le premier dispositif de communication portable.

16. Procédé selon la revendication 9, où chacun des premier et second dispositifs de communication portables est un dispositif parmi un téléphone portable, un smartphone, un assistant numérique personnel (PDA), un PC de poche, un lecteur multimédia portable (PMP), un système de navigation pédestre (PNS) et un système de navigation automobile (CNS).
